# EUROPEAN PATENT APPLICATION

(11) **EP 4 148 339 A1**
(43) Date of publication of application: **15.03.2023**
(21) Application number: 21196431.7
(22) Date of filing: 13.09.2021
(51) Int. Cl.: F24S 25/67, F24S 25/20, F24S 25/10, H02S 30/10, H02S 30/20, H02S 10/40, F24S 25/33

(54) **ASSEMBLY FOR A PORTABLE SOLAR ENERGY SYSTEM**

(71) Applicant: CEP-IP Ltd, Cambridge, Cambridgeshire CB4 2HY (GB)
(72) Inventor: GRANT, Thomas McGregor James, Cambridge Cambridgeshire, CB4 2NR (GB)
(74) Representative: Torner, Juncosa I Associats, SL

(57) **Abstract**

The present invention discloses a photovoltaic assembly for a portable solar energy system, the photovoltaic assembly comprising a row of interconnected photovoltaic panels, each photovoltaic panel comprising a perimeter frame; a foldable stiffening and/or supporting structure comprising articulated members, the foldable stiffening and/or supporting structure being movable between a folded position and an operative position; wherein it further comprises at least two support elements, each support element defining a support section adapted to the shape of the perimeter frame, for supporting a longitudinal side edge of the perimeter frame of two adjacent photovoltaic panels; said support element comprising a first lateral face perpendicular; and wherein one or more articulated members of the foldable stiffening and/or supporting structure are connected in an articulated manner to the first lateral face of the corresponding support element without traversing the one or more longitudinal side edges received in the support section.

## Description

### TECHNICAL FIELD

The present invention relates to the field of portable solar energy systems. In particular, the present invention relates to the field of photovoltaic assemblies which ease the transport and installation of photovoltaic panels for a solar energy collection system.

The invention provides a photovoltaic assembly for a portable solar system.

### BACKGROUND ART

Photovoltaic panels or laminates are widely used to generate electricity from sunlight. Photovoltaic panels or laminates are usually fixed on surfaces like roofs, building facades, on the ground, etc. using supporting structures, which may be known as photovoltaic mounting systems or solar module racking, among others. Such structures may differ depending on whether they support photovoltaic panels or photovoltaic laminates, as they are designed to be attached to their supporting structures in different ways, the main reason being that photovoltaic panels usually comprise a perimeter frame that provides structural integrity, whereas photovoltaic laminates usually lack any perimeter frame. Usually, photovoltaic panels are more robust than photovoltaic laminates. However, drilling or piercing the perimeter frame of the photovoltaic panels should be avoided as it could hinder its mechanical properties and/or void the manufacturer's warranty. Therefore, supporting structures should consider the differences between photovoltaic laminates and photovoltaic panels.

A solar panel or laminate performs the best when its surface is substantially perpendicular to the sun's rays, which change continuously over the course of the day and season. The supporting structures of the photovoltaic panels or laminates are also often used to orientate the photovoltaic panels or laminates in regard to solar radiation to maximize their energy production. Said supporting structure may be fixed, i.e., the photovoltaic panels or laminates have a fixed orientation, or may tilt, i.e., the orientation of the photovoltaic panels or laminates may vary depending on the position of the sun.

A solar energy system typically comprises one or more photovoltaic assemblies, which typically comprise one or more photovoltaic panels or laminates and a supporting structure.

Photovoltaic assemblies are usually installed at locations remote from its manufacturing site. Consequently, there is a need to transport the energy system components from their manufacturing site to the installation site where they will be assembled. Therefore, it is advantageous to provide a solar energy system that can be assembled in optimal conditions off-site and easily transported, as this can provide a significant cost reduction, among other benefits.

Besides being transported from the manufacturing site, or any intermediate storage site, to the location where the solar energy system is to be installed, the photovoltaic assemblies need to be mounted or installed. Consequently, it is advantageous if the photovoltaic assemblies of a solar energy system can be easily installed, as this can provide a significant time and cost reduction, an increase in worker safety, etc.

WO 2010/098806 A1 discloses a photovoltaic assembly comprising an array of photovoltaic laminates supported on a perimetral frame formed by top and bottom beams, side beams, and intermediate beams shared between two photovoltaic laminates, and a stiffening device formed by interconnected profiles. The stiffening device is configured to be transitioned between an operative position, in which the stiffening device protrudes from a lower side of the photovoltaic assembly and provides support and strengthening thereto, and a folded position, in which the stiffening device is maintained in its entirety within a receiving zone defined by the perimeter frame of the photovoltaic assembly. Said receiving zone is disclosed to have a height of no more than 8 inches thereby facilitating transport of the photovoltaic assembly.

### BRIEF DESCRIPTION OF THE INVENTION

In order to provide a photovoltaic assembly for a solar energy system which can be easily transported, assembled and, if necessary, disassembled, to be transported to a further location, the present invention discloses a photovoltaic assembly for a portable solar energy system, the photovoltaic assembly comprising: a row of interconnected photovoltaic panels, each photovoltaic panel comprising a perimeter frame, said perimeter frame comprising a pair of longitudinal and a pair of transverse side edges, said photovoltaic panel defining an internal and an external major surface; a foldable stiffening and/or supporting structure comprising articulated members, the foldable stiffening and/or supporting structure being movable between a folded position and an operative position; wherein the photovoltaic assembly further comprises at least two support elements, each support element defining a support section adapted to the shape of the perimeter frame, for supporting one longitudinal side edge of the perimeter frame of two adjacent photovoltaic panels and each support element being attached to said longitudinal side edges; said support element comprising a first lateral face perpendicular to the internal major surface of the photovoltaic panel and contiguous to the support section; and wherein one or more articulated members of the foldable stiffening and/or supporting structure are connected in an articulated manner to the first lateral face of the corresponding support element without traversing the one or more longitudinal side edges received in the support section.

Besides providing a photovoltaic assembly for a portable energy system which can be easily transported, the present invention achieves this goal without reducing the structural integrity of the photovoltaic panel and/or voiding its manufacturer's warranty, as it does not need to drill or pierce the perimeter frame, or any other component, of the photovoltaic panel.

According to the present invention, in the folded position of the foldable stiffening and/or supporting structure a face of the articulated members may be substantially coplanar with the internal major surface of the photovoltaic laminate, that is to say, a face of the articulated members may be substantially in contact with the internal major surface of the photovoltaic laminate.

According to the present invention, in the folded position of the foldable stiffening and/or supporting structure a face of the articulated member may be substantially parallel to the internal major surface of the photovoltaic laminate. In such case, the distance between the internal major surface of the photovoltaic panel and said face of the articulated member may be less than 5 cm, preferably less than 3 cm, more preferably less than 2 cm, even more preferably less than 1 cm.

According to the present invention, in its operative position, the foldable stiffening and/or supporting structure may be configured to support the photovoltaic assembly. According to the present invention, the support element may comprise a second lateral face opposite the first one.

According to the present invention, the support element may be a U-shaped beam. According to the present invention, the support element may be a L-shaped beam. According to the present invention, two or more articulated members of the foldable stiffening and/or supporting structure may be connected in an articulated manner to the first lateral face of the support element.

According to the present invention, one or more articulated members of the foldable stiffening and/or supporting structure may be connected in an articulated manner to the second lateral face of the support element.

According to the present invention, each longitudinal side edge of the perimeter frame of the photovoltaic panels may be received in a support element.

According to the present invention, the longitudinal side edges of the perimeter frame of the photovoltaic panels may comprise orifices in a face parallel to the internal major surface of the photovoltaic panels; and the support elements may be attached to the corresponding longitudinal side edges by fasteners passing through said orifices of the perimeter frame. This provides a secure fastening between the photovoltaic panel and, in particular, between the perimeter frame of the photovoltaic panel and the corresponding support element, without damaging or weakening the photovoltaic panel or risking voiding the manufacturer's warranty of the photovoltaic panel.

According to the present invention, the fasteners may comprise at least one of the following: rivets, bolts, screws.

According to the present invention, the articulated members may be connected in an articulated manner to their corresponding support element by an interconnection pin. According to the present invention, the interconnection pins may be mutually aligned, thus providing a common pivot axis of the interconnected photovoltaic panels relative to the foldable stiffening and/or supporting structure.

According to the present invention, the interconnection pins comprised in the first lateral face of the support elements may be mutually aligned and the interconnection pins comprised in the second lateral face of the support elements may be mutually aligned. According to the present invention, the foldable stiffening and/or supporting structure may comprise one or more reinforcing members interconnecting the articulated members.

According to the present invention, the one or more reinforcing members may comprise one or more beams.

According to the present invention, said one or more beams may have at least one of the following cross-sections: squared, rectangular, circular, L-shaped or U-shaped.

According to the present invention, it is accepted that part of the foldable stiffening and/or supporting structure may protrude from the support element, although it is preferred that it protrudes minimally to reduce the space required for the transport of the photovoltaic assembly.

According to the present invention, the perimeter frame of the photovoltaic panels can have an open or a closed cross section. In particular, the perimeter frame can have a L-shaped, squared, rectangular, semi-circular, circular, etc. cross section.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### BRIEF DESCRIPTION OF THE FIGURES

The foregoing and other advantages and features will be more fully understood from the following detailed description of an embodiment with reference to the accompanying drawings, to be taken in an illustrative and non-limitative manner, in which:
FIG.1 shows a perspective view of a first exemplary embodiment of a photovoltaic assembly for a portable solar energy according to the present invention, with its foldable stiffening and/or supporting structure exposed and in a folded position.
FIGS. 1A, 1B and 1C show a first, second and third detail view, respectively, of the first exemplary embodiment of a photovoltaic assembly shown in FIG. 1.
FIG. 2 shows a perspective view of the first exemplary embodiment of a photovoltaic assembly shown in FIG. 1 with its stiffening and/or supporting structure in an operative position.
FIG. 3 shows a section view of a first part of the first exemplary embodiment of a photovoltaic assembly shown in FIGS. 1 and 2.
FIG. 4 shows a section view of a second part of the first exemplary embodiment of a photovoltaic assembly shown in FIGS. 1 and 2.
FIG. 5 shows a section view of a part of a second exemplary embodiment of a photovoltaic assembly for a portable solar energy according to the present invention.

### DETAILED DESCRIPTION OF AN EMBODIMENT

The foregoing and other advantages and features will be fully understood from the following detailed description of an embodiment with reference to the accompanying drawings, to be taken in an illustrative and not limitative way.

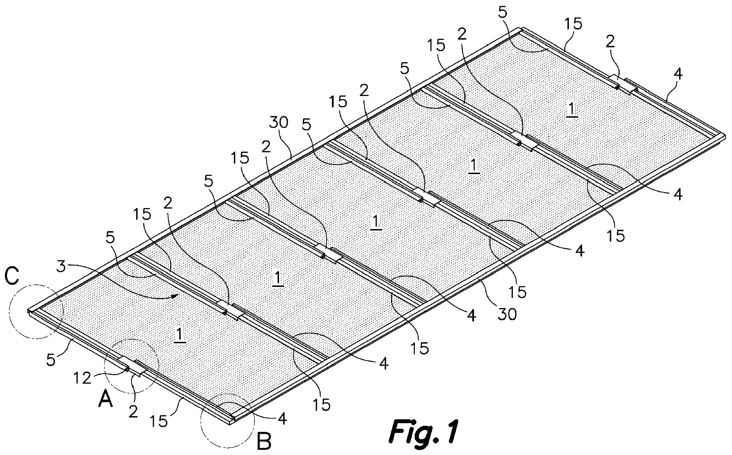

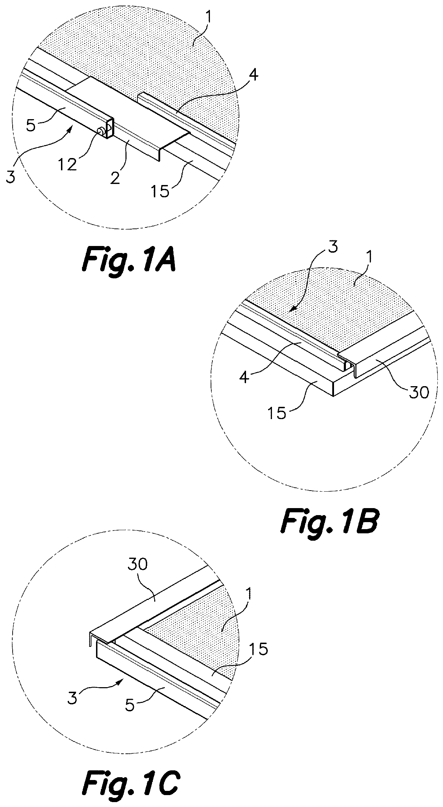

FIG. 1 shows in a perspective view a first exemplary embodiment of a photovoltaic assembly for a portable solar energy system according to the present invention, with its foldable stiffening and/or supporting structure 3, exposed and in a folded position. FIGS. 1A, 1B and 1C show a first, second and third detail view, respectively, of the first exemplary embodiment of a photovoltaic assembly shown in FIG. 1.

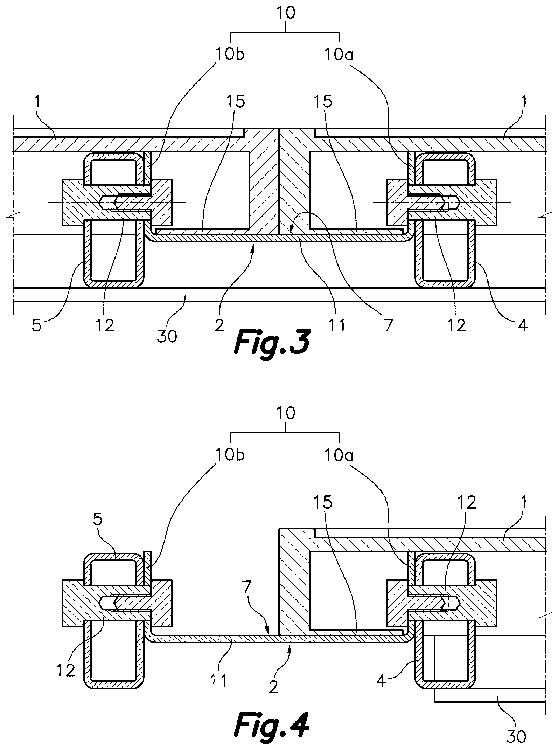

In the detail view of FIG. 1A can be seen how, in the first exemplary embodiment, support elements 2 comprise an articulated member 4, 5 attached at each of its lateral faces 10 (see FIG. 3), which are perpendicular to the internal major surface of the corresponding photovoltaic panel 1. These articulated members 4, 5 are pivotally attached to the corresponding support element 2 by an interconnection pin 12 (see for greater detail FIG. 3 or 4).

In other embodiments, it is also possible that one or more support elements 2 comprise only one articulated member 4,5. In such case, it is important that the support element 2 is provided with means to lock the rotation of the articulated member 4, 5 in order to provide a stable position of the foldable stiffening and/or supporting structure 3 when it is in its working or operative position. Examples of means to lock the rotation of an articulated member 4, 5 are: a locking pin traversing the articulated member 4, 5 and being fixed to the support member 2, one or more stops, etc.

In the folded position of the foldable stiffening and/or supporting structure 3 of this first exemplary embodiment depicted in FIG. 1, a face of the articulated members 4, 5 is substantially coplanar with the internal major surface of the photovoltaic panel 1, i.e., a face of the articulated member 4,5 is substantially in touch with the internal major surface of the photovoltaic panel 1. It is also possible that in other embodiments, in the folded position, a face of the articulated members 4, 5 is not substantially coplanar with the internal major surface of the photovoltaic panel 1. In the latter case, for example, the face of the articulated member 4, 5 closer to the internal major surface of the photovoltaic panel 1 can be parallel to said internal major surface. In such case, the distance between the internal major surface of the photovoltaic panel 1 and said face of the articulated member can be less than 5 cm, preferably less than 3 cm, more preferably less than 2 cm, even more preferably less than 1 cm.

The first exemplary embodiment shown comprises five interconnected photovoltaic panels 1. Other embodiments of the present invention, may comprise a different number of photovoltaic panels 1, for example, two, six, ten, etc.

The photovoltaic panels 1 comprise an internal and an external major surface. Due to the perspective used, in FIG. 1 only the internal major surface of the photovoltaic panels 1 can be seen. In this embodiment, the foldable stiffening and/or supporting structure 3 comprises reinforcing members interconnecting the articulated members 4,5. In this first exemplary embodiment, the reinforcing members comprise two longitudinal beams 30, each one on opposite ends following a transverse direction of the photovoltaic assembly. Said longitudinal beams 30 are connected or joined to corresponding articulated members 4, 5 and besides increasing the structural integrity of the foldable stiffening and/or supporting structure 3, also increase the stability of the photovoltaic assembly when it is in its working or operative position standing on the ground or any other supporting surface. Furthermore, as can be seen in the detail views of FIG. 1B and 1C, in this first exemplary embodiment, when the foldable stiffening and/or supporting structure 3 is in its resting or folded position, the beams 30 act as a protector of the transverse side edges of the perimeter frame 15, providing protection to said perimeter frame 15 when the photovoltaic assembly is being transported or lifted, among others.

In the first exemplary embodiment, all support elements 2, including the ones at the ends of the photovoltaic assembly, comprise two articulated members 4, 5. However, in other embodiments one or more support elements 2 can comprise a different number of articulated members 4,5, for example, one, three, etc.

This first exemplary embodiment comprises a support element 2 between each pair of interconnected photovoltaic panels 1 with one additional support element 2 at both ends of the row of interconnected photovoltaic panels 1, making a total of six support elements 2 for five photovoltaic panels 1, that is to say, the first exemplary embodiment comprises n+1 support elements, wherein n is the number of photovoltaic panels. However, other embodiments of the present invention can comprise a different number of support elements 2, as only two support elements 2, each one comprising one or more articulated members 4, 5 would suffice to keep the photovoltaic assembly in an operative position. Nonetheless, even if only two support elements 2 would suffice, a higher number is preferred as it would increase the stability and structural integrity of the photovoltaic assembly. In embodiments lacking sufficient support elements 2 to interconnect all adjacent photovoltaic panels 1, other kind of fastening means might be used to interconnect adjacent photovoltaic panels 1. For example, one suitable fastening means could be a support element adapted to the shape of the perimeter frame of two adjacent photovoltaic panels, similar to the one shown in the second detail view of FIG. 1, but lacking articulated members 4, 5. If the perimeter frame of the photovoltaic panels comprises orifices in a face perpendicular to the internal major surface and adjacent to the contiguous photovoltaic panels, fasteners such as bolts, rivets, screws, etc. could also be used to interconnect two adjacent photovoltaic panels 1.

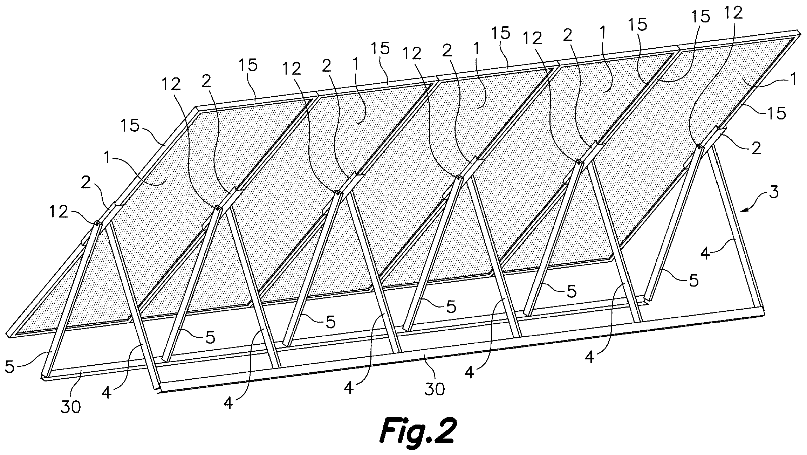

FIG. 2 depicts in a perspective view the first exemplary embodiment of a photovoltaic assembly shown in FIG. 1, but with its foldable stiffening and/or supporting structure 3 in a working or operative position. In said working or operative position of the exemplary embodiment shown, the foldable stiffening and/or supporting structure 3 supports the photovoltaic assembly and, in particular, the photovoltaic panels 1, generally at a position that maximizes their energy production.

In the embodiment shown, in the operative position, each pair of articulated members 4, 5 are arranged to form a triangle, which rests on the ground or any other supporting surface via the end beams 30. However, in other embodiments the articulated members 4,5 may be arranged differently.

In other embodiments of the present invention, the lateral walls or faces 10 of the support element 2 may comprise more than one articulated member 4,5. It is also possible that in other embodiments the articulated members 4,5 comprise further articulated members attached to them in an articulated or pivotal manner, to create a more robust or stiff foldable stiffening and/or supporting structure 3, for example.

FIG. 3 shows a section of a first part of the first exemplary embodiment of a photovoltaic assembly shown in FIGS. 1 and 2. The cutting plane of FIG. 3 is perpendicular to the internal major surface of the photovoltaic panel 1 and cuts the interconnection pin 12 through its longitudinal axis.

In particular, FIG. 3 shows a section view of a support element 2, together with the corresponding articulated members 4, 5 and two adjacent photovoltaic panels 1 supported by said support element 2 by their perimeter frames 15. The support element 2 defines a support section 7 adapted to the shape of the perimeter frames 15 and is attached to the longitudinal side edges of the perimeter frames 15. Said perimeter frames 15 are received in the support element 2 which is adapted to the shape of said perimeter frames 15.

Although the exemplary embodiments shown comprise a perimeter frame 15 of a L-shaped cross section; that is to say, comprising a first face or wall extending perpendicular to the internal major surface of the photovoltaic panel 1 and a second face or wall extending perpendicular to said first face or wall of the perimeter frame 15 and being parallel to the internal major surface of the photovoltaic panel 1; in other embodiments the perimeter frame 15 can comprise a different cross section, for example, circular, rectangular, triangular, etc. In any case, the shape of the support element 2 is adapted to the shape of the perimeter frame 15. As can be derived from the above, the perimeter frame 15 can have an open or a closed cross section.

In the first exemplary embodiment shown, the support section 7 is formed by a support wall 11 extending parallel to the internal major surface of the photovoltaic panels 1 and two lateral walls or faces 10a, 10b extending perpendicularly from the end of said support wall 11, that is to say, the support element 2 of this first exemplary embodiment has a U-shaped cross section. However, in other embodiments the support element 2 can have a different cross section, such as L-shaped, in which case it only has one lateral wall or face 10. The articulated members 4, 5 are pivotally attached to the corresponding lateral wall or face 10a, 10b by a pivot or interconnection pin 12 extending parallel to the internal major surface of the photovoltaic panel 1.

Said pivot or interconnection pin 12 does not traverse the longitudinal side edges of the perimeter frame 15 received in the support section 7 of the support element 2. This is one of the advantages of the present invention, as piercing or drilling the perimeter frame 15 could void the manufacturers' warranty of the photovoltaic panel 1.

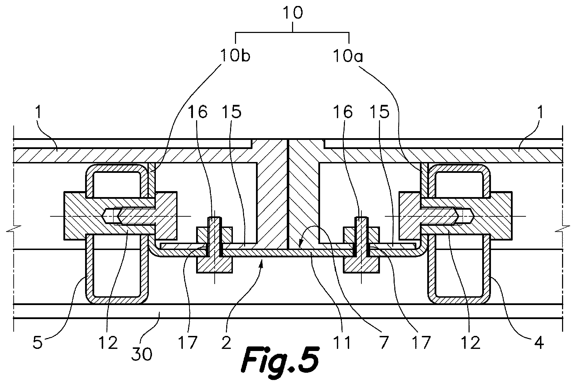

In this embodiment, the support element is joined to the perimeter frame 15 of adjacent photovoltaic panels by dimensional interference. Nonetheless, in other embodiments additional or alternative attaching means can be used, as for example, glue, weld or fasteners. The use of fasteners to attach the support element to the perimeter frame 15 is further described in the context of FIG. 5.

FIG. 4 shows a section view of a second part of the first exemplary embodiment of a photovoltaic assembly shown in FIGS. 1 and 2. In particular, FIG. 4 shows a section view, through a cutting plane perpendicular to the internal major surface of the photovoltaic panel 1 and that cuts the interconnection pin 12 through its longitudinal axis, of a support element 2 located at one of the ends of the photovoltaic assembly. As can be seen, in this first exemplary embodiment the support elements 2 located at the ends of the photovoltaic assembly, and in particular, its support section 7, only receive one longitudinal side edge of the perimeter frame 15 of a photovoltaic panel 1. However, the support element shown in FIG. 4 is as the one shown in FIG. 3, which receives two longitudinal side edges of the perimeter frame 15 of two adjacent photovoltaic panels 1 and consequently, the support element 2 shown has an empty space for a further side edge of a perimeter frame 15. Having all support elements 2 of equal or similar characteristics reduce the complexity and cost of manufacturing and the cost of management of components and spare parts. Nonetheless, in other embodiments, the support elements 2 at the ends of the photovoltaic assembly may be shaped and dimensioned, i.e., configured, to support a single longitudinal side edge of the perimeter frame 15 of a photovoltaic panel 1. If the support elements 2 at the ends of the photovoltaic assembly are dimensioned to only support a single perimeter frame 15, it is avoided the risk of dust, dirt, etc. being accumulated at the empty space where a further perimeter frame 15 should be placed, as in the case of intermediate support elements 2 (see FIG. 3), thus avoiding the risk of damaging either the support element 2 or the photovoltaic panel 1. Such a solution also increases the aesthetic properties of the photovoltaic assembly. However, it adds complexity to the manufacturing process and to the management of spare parts.

FIG. 5 shows a section view of a part of a second exemplary embodiment of a photovoltaic assembly for a portable solar energy according to the present invention. The cutting plane of this section view is perpendicular to the internal major surface of the photovoltaic panel 1 and cuts the interconnection pin 12 through its longitudinal axis. This second exemplary embodiment differs from the first one shown in FIGS. 1 to 4 mainly in the attachment of the support element 2 to the perimeter frame 15. In particular, in this second exemplary embodiment the support element 2 is attached to the perimeter frames 15 of adjacent photovoltaic panels 1 by using fasteners 16 that pass-through orifices 17 in the perimeter frame 15 of the photovoltaic panels 1. Said orifices 17 are preferably in a face of the perimeter frame 15 parallel to the internal major surface of the photovoltaic panel 1 and may define a longitudinal axis perpendicular to the internal major surface of the photovoltaic panel 1. In the exemplary embodiment shown, the fasteners 16 comprise bolts and nuts, but in other embodiments the fasteners 16 may be, for example, rivets, screws, etc. In similar embodiments, the fasteners 16 and orifices 17 can be used to improve the fastening of the support element 2 to the perimeter frame 15 provided, for example, by the dimensional interference between said support element 2 and said perimeter frame 15.

As said orifices 17 of the perimeter frame 15 of the second exemplary embodiment are preferably made by the manufacturer, they don't affect the manufacturer's warranty of the photovoltaic panel 1. If the manufacturer of the photovoltaic panels 1 allows to do so, the orifices 17 might also be made by the user, the installer or any other third party. Typically, photovoltaic panels 1 comprising orifices 17 on its perimeter frame 15 are designed and engineered considering the presence of such orifices 17 and, consequently, the mechanical properties of the photovoltaic panels 1 are not substantially affected by said orifices 17.

Even though in the above-described embodiments, the articulated members 4, 5 protrude from the perimeter frame 15 and the support element, the photovoltaic assemblies are very compact when the foldable stiffening and/or supporting structure 3 is in its folded or resting position.

Although the exemplary embodiments shown only comprises beams 30 as reinforcing members of the foldable stiffening and/or supporting structure 3, other embodiments can comprise further reinforcing members, such as truss sections, of different cross-sections in order to increase the structural integrity of the foldable stiffening and/or supporting structure 3 of the photovoltaic assembly.

As stated above, the present invention provides a photovoltaic assembly for a portable energy system that can be easily transported and installed, thus reducing the transport and installation costs. Moreover, the photovoltaic assembly of the present invention can also be easily uninstalled, placed in its folded position, and transported to another location where it may be needed.

It will be understood that various parts of one embodiment of the invention can be freely combined with parts described in other embodiments, even being said combination not explicitly described, provided that such combination is within the scope of the claims and that there is no harm in such combination.

## Claims

1. A photovoltaic assembly for a portable solar energy system, the photovoltaic assembly comprising:
a row of interconnected photovoltaic panels (1), each photovoltaic panel comprising a perimeter frame (15), said perimeter frame (15) comprising a pair of longitudinal and a pair of transverse side edges, said photovoltaic panel (1) defining an internal and an external major surface;
a foldable stiffening and/or supporting structure (3) comprising articulated members (4, 5), the foldable stiffening and/or supporting structure (3) being movable between a folded position and an operative position;
**characterized in that** it further comprises at least two support elements (2), each support element (2) defining a support section (7) adapted to the shape of the perimeter frame (15), for supporting one longitudinal side edge of the perimeter frame (15) of two adjacent photovoltaic panels (1) and each support element (2) being attached to said longitudinal side edges;
said support element (2) comprising a first lateral face (10a) perpendicular to the internal major surface of the photovoltaic panel and contiguous to the support section (7); and
wherein one or more articulated members (4, 5) of the foldable stiffening and/or supporting structure (3) are connected in an articulated manner to the first lateral face (10a) of the corresponding support element (2) without traversing the one or more longitudinal side edges received in the support section (7).

2. The photovoltaic assembly, according to claim 1, wherein the support element (2) comprises a second lateral face (10b) opposite the first one.

3. The photovoltaic assembly, according to claim 2, wherein the support element (2) is a U-shaped beam.

4. The photovoltaic assembly, according to according to claim 1, wherein the support element (2) is a L-shaped beam.

5. The photovoltaic assembly, according to according to any one of the preceding claims, wherein two or more articulated members (4, 5) of the foldable stiffening and/or supporting structure (3) are connected in an articulated manner to the first lateral face (10a) of the support element.

6. The photovoltaic assembly, according to claim 2 or 3, wherein one or more articulated members (4, 5) of the foldable stiffening and/or supporting structure (3) are connected in an articulated manner to the second lateral face (10b) of the support element.

7. The photovoltaic assembly, according to any one of the preceding claims, wherein each longitudinal side edge of the perimeter frame (15) of the photovoltaic panels (1) is received in a support element (2).

8. The photovoltaic assembly, according to any one of the preceding claims, wherein the longitudinal side edges of the perimeter frame (15) of the photovoltaic panels (1) comprise orifices (17) in a face parallel to the internal major surface of the photovoltaic panels (1); and
wherein the support elements are attached to the corresponding longitudinal side edges by fasteners (16) passing through said orifices of the perimeter frame.

9. The photovoltaic assembly, according to claim 8, wherein the fasteners (16) comprise at least one of the following: rivets, bolts, screws.

10. The photovoltaic assembly, according to any one of the preceding claims, wherein the articulated members (4, 5) are connected in an articulated manner to their corresponding support element (2) by an interconnection pin (12).

11. The photovoltaic assembly, according to claim 10, wherein the interconnection pins (12) are mutually aligned.

12. The photovoltaic assembly, according to any one of the preceding claims, wherein the foldable stiffening and/or supporting structure (3) comprise one or more reinforcing members interconnecting the articulated members.

13. The photovoltaic assembly, according to claim 12, wherein the one or more reinforcing members comprise one or more beams (30).

14. The photovoltaic assembly, according to claim 13, wherein said one or more beams (30) have at least one of the following cross-sections: squared, rectangular, circular, L-shaped or U-shaped.
